# EUROPÄISCHE PATENTSCHRIFT

(11) **EP 0 819 194 B1**
(45) Veröffentlichungstag und Bekanntmachung des Hinweises auf die Patenterteilung: **06.10.1999**
(21) Anmeldenummer: 96910930.5
(22) Anmeldetag: 26.03.1996
(51) Int. Cl.: D21H 27/00, C09J 7/04, D21H 19/82, D21H 19/38

(54) **TRENNROHPAPIERE MIT PIGMENTSTRICHEN AUF DER BASIS VON ALUMINIUMHYDROXIDEN**
BASE RELEASE PAPERS WITH PIGMENT COATINGS BASED ON ALUMINIUM HYDROXIDES
PAPIERS BRUTS DE SEPARATION AVEC REVETEMENTS PIGMENTAIRES A BASE D'HYDROXYDES D'ALUMINIUM

(30) Priorität: 05.04.1995 DE 19512663
(43) Veröffentlichungstag der Anmeldung: 21.01.1998
(73) Patentinhaber: KÄMMERER GMBH, D-49090 Osnabrück (DE)
(72) Erfinder: REINHARDT, Bernd, D-49082 Osnabrück (DE)
(74) Vertreter: Cohausz & Florack
(86) Internationale Anmeldenummer: EP9601319
(87) Internationale Veröffentlichungsnummer: WO9631651

(56) Entgegenhaltungen:
- EP-A- 0 307 578
- EP-A- 0 315 297
- DATABASE WPI Section Ch, Week 9442 Derwent Publications Ltd., London, GB; Class A18, AN 94-338498 XP002005144 & JP,A,06 264 038 (OJI PAPER CO) , 20.September 1994

## Beschreibung

Herkömmliche pigmentgestrichene Trennrohpapiere weisen eine ein- oder beidseitige Beschichtung von Pigment/Bindemittel-Gemischen auf, wobei als Pigmente Clay (Kaolin), Talkum oder Calciumcarbonat allein oder in Kombination und als Bindemittel vorwiegend Polymerdispersionen, oft in Abmischung mit modifizierten Stärkeprodukten, verwendet werden. Die bessere Glättbarkeit und damit höhere Oberflächendichtigkeit gestatten plättchenförmige Pigmente wie Clay oder auch begrenzt Talkum.

Im allgemeinen werden deshalb diese pigmentgestrichenen Trennrohpapiere als "clay coated papers" bezeichnet, wodurch bereits auf das hauptsächlich verwendete Streichpigment hingewiesen wird (Coating, 1987, Heft 10, S.366-372 und Heft 11, S.396-398).

Gegenüber unpigmentierten Papierbeschichtungen weisen diese Papierqualitäten wirtschafliche und qualitative Vorteile auf, wie
- bessere Glättbarkeit
- geringere Porosität
- geringere Strichrauheit
- höhere Oberflächendichtigkeit
- höheren Glanz
- höheren "silicone hold out"
und damit einen teilweise geringeren Siliconverbrauch zum Erreichen eines weitgehend geschlossenen Siliconfilms hoher Dehäsivwirkung.

Neuere Entwicklungen auf dem Gebiet der Auftragstechnologie, die auf der direkten oder indirekten Filmtransfer-Technik basieren, gestatten bereits das Aufbringen dünner Pigmentstriche unter 5 g/m² (fest) innerhalb der Papiermaschine auf das Rohpapier. Für diese on line-Pigmentierung werden vorwiegend Walzenauftragswerke mit volumetrischer Vordosierung (Gate-Roll- und Blade-Metering-Filmpressen oder Klingenstreichaggregate mit Vordosiereinrichtung: High Special Metering Dosiertechnik wie Billblade HSM, LAS, HSM und Twin-HSM) verwendet (s. Das Papier, 1991, Heft 10 A, S.V 120-V 124, Wochenblatt für Papierfabrikation, 1993, Heft 10, S.390-393 und 1994, Heft 17, S.671-676).

Ziel dieser Beschichtungen ist vorwiegend die Verbesserung der Bedruckbarkeit von Papier, insbesondere im Offsetdruck.

Diese neue Auftragstechnologie, auch oft als Dünnstrichtechnologie bezeichnet, wird deshalb ebenfalls für die Herstellung pigmentgestrichener Trennrohpapiere mit geringen Strichaufträgen genutzt.

Im Gegensatz zu bisherigen Einsatzgebieten, bei denen im allgemeinen die Bedruckbarkeit durch gezielte Einstellung der Strichporosität und Strichsaugfähigkeit von Papieren im Vordergrund steht, liegt nun aber der Schwerpunkt im Erzielen einer weitgehend geschlossenen Papieroberfläche bei möglichst geringem Strichauftrag. Nur so kann ebenso wie bei den bereits erwähnten klassischen "clay coated"-Trennrohpapieren mit oft höherem Strichauftrag die Penetrationsneigung von Siliconharzen bei der nachfolgenden Beschichtung zu Trennpapieren in Grenzen gehalten werden.

Mittels Dünnstrichtechnologie hergestellte pigmentgestrichene Trennrohpapiere mit Strichaufträgen von etwa 5 g/m² (fest) werden seit 1994 hergestellt. Als Pigmente finden hauptsächlich spezielle Claymischungen mit definierter Teilchengrößenverteilung und möglichst ausgeprägter plättchenförmiger Struktur Anwendung. Es hat auch nicht an Versuchen gefehlt, das ebenfalls plättchenförmige Talkum oder Calciumcarbonat als Streichpigment dafür einzusetzen. Letzt genanntes Pigment genügt jedoch aufgrund seiner kugelförmigen Stuktur nicht ausreichend den gestellten Anforderungen bezüglich Oberflächendichtigkeit und Transparenz und wird deshalb meistens nur in Kombination mit Clay oder Talkum verwendet.

Bei der Beschichtung von Trennrohpapieren mittels Siliconharzen zur Herstellung von Trennpapieren werden höchste Anforderungen an die Gleichmäßigkeit des Siliconauftrags gestellt, da es sonst zu unvertretbar hohen Abweichungen im Trennverhalten der siliconisierten Papiere und damit beispielsweise zu Störungen beim Etikettierprozeß kommt. Üblicherweise wird die Gleichmäßigkeit des Siliconauftrags durch Röntgenfluoreszenzmessung des Siliciums als Hauptbestandteil eines Siliconharzes ermittelt, wobei die Eindringtiefe der Röntgenstrahlen in den Papierquerschnitt auf etwa 5 µm begrenzt ist.

Clay (natürliches Aluminiumsilicat) oder Talkum (natürliches Magnesiumsilicat) stören jedoch aufgrund ihres Siliciumanteils die exakte Bestimmung des Siliconauftragsgewichts beträchtlich bzw. machen sie bei den klassischen "clay coated"-Trennrohpapieren mit höheren Pigmentstrichaufträgen über 5 g/m² (fest) unmöglich.

Im letzteren Fall bleibt meistens nur die volumetrische Messung des Siliconverbrauchs über einen längeren Produktionszeitraum, die aber keine Aussage über die Gleichmäßigkeit des Siliconauftrags in Längs- und Querrichtung des Papiers zuläßt.

Bei pigmentgestrichenen Trennrohpapieren mit einem Strichauftrag unter 5 g/m² können Strichgewichtsschwankungen von bis ± 0,3 g/m² bis ± 0,5 g/m² auftreten, die sich in den Bereich üblicher Silicon-aufträge von 0,5 bis 0,8 g/m² bei Verwendung lösungsmittelhaltiger Siliconharze oder 0,8 bis 1,2 g/m² bei Verwendung lösungsmittelfreier Siliconharze bereits sehr störend auf eine exakte Siliconauftragsbestimmung mittels Röntgenfluoreszenzmessung bemerkbar machen.

Das ist einer der Gründe, warum solche mit Clay oder Talkum als Basispigmente nach der Dünnstrichtechnologie hergestellten Trennrohpapiere mit Strichaufträgen unter 8 g/m², meistens unter 5 g/m² nicht oder nur sehr zögerlich Anwendung in der Praxis finden.

Ein weiterer Grund ist der störende Einfluß von permanentem Alkali im Pigmentstrich auf die Siliconverankerung und Siliconvernetzung, vor allem bei längerer Lagerung von Verbundmaterial (Verbund von siliconisiertem Basispapier und Klebstoff beschichtetem Oberlagenpapier, z.B. Etiketten), der allgemein unter Fachleuten als "post rub off" bezeichnet wird.

Zur Vollständigen Dispergierung und Stabilisierung von Streichpigmenten in Wasser und damit zum Einstellen der gewünschten niedrigen Viskosität der Streichmasse wird aber vorwiegend Natronlauge in Kombination mit speziellen Dispergiermitteln verwendet.

Die JP 49-132 305 A beschreibt ein Druckpapier mit hohem Glanzgrad und guten Gleiteigenschaften, welches gemäß einer Ausführungsform auf dem Basispapier eine Unterschicht aus 20 Teilen Kaolin, 80 Teilen Aluminiumhydroxid und 30 Teilen Milchcasein und in der darauf befindlichen Oberschicht 70 Teile Kaolin, 30 Teile Polystyrol und 20 Teile Styrol/Butadien-Latex enthält. Dieser Zweischichtaufbau ist zum Erhalt des geforderten Glanzgrads und der erwünschten Glätteeigenschaften zwingend.

JP 6-264038 A betrifft ein druckempfindliches Klebeband, welches aus einem gekreppten Kraftpapier und einem darauf aufgebrachten Pigment und Bindemittel enthaltenen Strich aufgebaut ist. Es wird ein Auftragstrockengewicht von 15 g/m² angegeben. Als Pigmente werden anorganische Pigmente wie Kaolin, Talkum, Calciumcarbonat, Titandioxid und Aluminiumhydroxid und organische Pigmente genannt. Die Versiegelung der Oberfläche des Kraftpapiers wird dieser Druckschrift zufolge insbesonders durch den hohen Strichauftrag erzielt.

Gelöst wird diese Aufgabe durch ein Trennrohpapier für die Beschichtung mit einem dehäsiven Siliconauftrag, bei dem ein Bindemittel enthaltender Pigmentstrich auf dem Papier ausgebildet ist und der Pigmentstrich Aluminiumhydroxid als einziges Pigment oder ein Pigmentgemisch mit Aluminiumhydroxid als Hauptbestandteil enthält und der Pigmentstrich in einer Stärke von 3 bis 10 g/m² auf dem Papier ausgebildet ist.

Aluminiumhydroxide sind plättchenförmige Pigmente, die im Vergleich zu üblicherweise eingesetzen Streichpigmenten die Verarbeitbarkeit von Streichmassen bei höheren Konzentrationen und höheren Bindemittelanteilen beeinträchtigen können. Es war deshalb überraschend, daß im Vergleich zu Clay oder Talkum als alleinige Streichpigmente gleiche oder sogar leicht bessere Oberflächendichtigkeiten der erfindungsgemäß pigmentgestrichenen Trennrohpapiere bei gleichzeitig besserer Haftung der nachfolgenden Siliconbeschichtungen erzielt wurden. Erhebliche Verbesserungen im "silicone hold out" und damit im Siliconbedarf zum Erreichen vorgegebener Trenneigenschaften des siliconisierten Papiers wurden dann aber nach der Siliconbeschichtung erreicht. Außerdem zeigten mit 100 % Aluminiumhydroxid gestrichene Trennrohpapiere keinerlei Verankerungs- oder Vernetzungsstörungen ("post rub off") des Siliconfilms über eine Lagerzeit von mehreren Wochen.

Der Pigmentstrich enthält ein Bindemittel. Geeignete Bindemittel sind alle in der Papierstreicherei üblichen wasserlöslichen Polymere wie Stärkederivate, Caboxymethylcellulose oder Polyvinylalkohole und wässrige Polymerdispersionen (Latices) auf der Basis von Acrylsäure, Acrylsäureestern, Acrylnitril, Vinylacetat, Butadien und Styrol allein oder in Gemischen. Bindemittel oder Bindemittelgemisch sind im Pigmentstrich in einem Pigment/Bindemittel-Verhältnis von 1:0,25 bis 1:2,3, vorzugsweise 1:0,3 bis 1:2,0 und in am meisten bevorzugter Weise von 1:0,35 bis 1:0,45 (fest gerechnet, d.h. auf das Feststoffgewicht bezogen) vorhanden.

Der Pigmentstrich kann auf einem oberflächengeleimten Papier oder aber auch auf einem Papier ohne Oberflächenleimung ausgebildet sein. Er kann in einem oder zwei Arbeitsgängen ein- oder beidseitig auf das Papier aufgebracht sein.

Das erfindungsgemäße Trennpapier enthält auf dem oben beschriebenen Pigmentstrich einen Siliconauftrag, der vorzugsweise in einer Menge von 0,9 bis 1,0 g/m² aufgebracht ist. Durch den Siliconauftrag werden die dehäsiven Eigenschaften verliehen.

Geeignete organische Siliconpolymere mit dehäsiven Eigenschaften sind dem Fachmann bekannt, sie umfassen beispielsweise kettenförmige Dimethylpolysiloxane mit endständigen Hydroxylgruppen, die unter der Einwirkung erhöhter Temperatur und in Gegenwart von Organozinnsalzen als Katalysator mit Kieselsäureestern kondensiert werden, oder auf dem Wege der Additionsvernetzung durch Reaktion von kettenförmigen Polymeren mit Vinylendgruppen mit Wasserstoffsiloxanen unter Temperatureinwirkung in Gegenwart von Platinkatalysatoren erhalten werden. Für die Beschichtung des Trennrohpapiers können die bereits genannten Auftragsverfahren eingesetzt werden.

Die Erfindung wird nun anhand von Beispielen näher erläutert.

### Beispiel 1

### Auswahl von Pigment-Bindemittel-Kombinationen, Streichmassenherstellung

Als bekannte geeignete Clay-Streichpigmente hinsichtlich einer weitgehend geschlossenen Strichoberfläche aufgrund ihrer ausgeprägten hexagonalen Plättchenstuktur hatten sich in der Praxis Clay-Mischungen definierter Teilchengröße bewährt.

Als typische Vertreter der ebenfalls plättchenförmigen Aluminiumhydroxid (Al(OH)₃)-Pigmente wurden die im Handel erhältlichen Typen I und II, die sich in ihrer Korngrößenverteilung und ihrer spezifischen Oberfläche deutlich unterscheiden, für die vergleichenden Untersuchungen ausgewählt. Ein Vergleich der Eigenschaften dieser Streichpigmente ist in der Tabelle 1 vorgenommen worden.

Für die Herstellung der Streichmassen wurde ein Pigment/Bindemittel-Verhältnis von 1:0,44 (fest) gewählt, bei dem nahezu alle Hohlräume in der Claymatrix mit Bindemittel ausgefüllt sind. Diese sogenannte kritische Pigmentvolumenkonzentration (KVPK) wurde mittels der Ölzahl in g Leinöl/100 g Pigment bestimmt, einer in der Lackindustrie üblichen Prüfmethode zur Ermittlung des etwaigen Bindemittelbedarfs. Die KVPK definiert demnach die maximal mögliche Packungsdichte eines Pigments. Die verwendeten AL(OH)₃-Pigmente weisen dagegen eine niedrigere Ölzahl als die Clay-Mischung gemäß Tabelle 1 auf. D.h., daß bei dem gewählten Pigment/Bindemittel-Verhältnis von 1:0,44 (fest) ein unterkritisch mit Al(OH)₃ pigmentierter Film vorliegt, bei dem alle Hohlräume in der Pigmentmatrix gefüllt sind. Diese Unterschiede in der Ölzahl und damit in der KVPK zwischen beiden Streichpigmenttypen lassen Bindemitteleinsparungen bei Verwendung von Al(OH)₃-Pigment erwarten.

Für die Herstellung der Streichmassen wurden die in Tabelle 2 aufgeführten Bindemittel verwendet, wobei sich die kationische Stärke (Stärke A) als anteilige Bindemittelkomponente bei Clay-Mischungen in Praxisversuchen bereits als besonders geeignet herausgestellt hat. Die Verwendung einer anionischen Stärke (Stärke B) in einer Clay-Streichmasse bewirkt zwar eine deutliche Viskositätsreduzierung, jedoch ist die Lagerstabilität (Viskositätsdifferenz zwischen Sofortmessung und Messung nach 24 h) schlechter.

Aluminiumhydroxid-Pigmente zeigen dagegen überraschenderweise ein völlig anderes Verhalten in solchen Streichmassen. Durch den Austausch der kationischen Stärke (Stärke A) durch die anionische Stärke (Stärke B) erhöht sich die Streichmassenviskosität bei gleichzeitig verbessertem Wasserrückhaltevermögen (WRV) deutlich. Niedrigere WRV-Werte in g/m² bzw. höhere WRV-Werte in s bedeuten ein verbessertes Rückhaltevermögen der Streichmasse bei Oberflächenauftrag auf Papier und damit eine geringere Penetration von Wasser und Bindemittel in das Rohpapier. Damit erhöht sich dann die Geschlossenheit der Strichoberfläche, bei gleichem Bindemitteleinsatz.

Für die folgenden Streichversuche wurde deshalb die anionische Stärke (Stärke B) bei Verwendung von Al(OH)₃ als alleiniges Streichpigment, dagegen die kationische Stärke (Stärke A ) bei Verwendung von Clay eingesetzt. Damit war die Voraussetzung zum Einsatz von Al(OH)₃ als alleiniges Streichpigment gegeben.

Der Feststoffgehalt dieser Streichmassen betrug 45 %, bei dem noch eine gute Verstreichpapier auf dem Rohpapier gegeben war.

### Beispiel 2

Auf ein nicht oberflächengeleimtes Rohpapier mit einer flächenbezogenen Masse von 62 g/m² wurden mittels eines Laborrakelgeräts Streichmassen der Zusammensetzung gemäß Tabelle 3 aufgetragen. Der Strichauftrag (fest) betrug 3 und 5 g/m².

Im Vergleich zu Clay-Streichmassen führt die Verwendung von AlOH₃ Typ II gemäß Tabelle 1 als Vertreter der AL(OH)₃-Typen zu einer etwas offeneren Strichoberfläche (höhere SCAN-Porosität, höhere Ölabsorption) aber zu einer etwas geringeren Mikrorauheit.

Die niedrigeren Glanzwerte bei Verwendung von Al(OH)₃ als alleinigem Steichpigment weisen auf eine nicht so ausgeprägte Plättchenstruktur und damit nicht so gute planparallele Ausrichtung der Pigmente zur Papierebene unter dem Einfluß der Satinage hin.

Grundsätzlich wurde jedoch mit diesem Versuch der Beweis erbracht, daß Al(OH)₃ als alleiniges Streichpigment in pigmentierten Streichmassen für Trennrohpapiere mit gutem Erfolg einsetzbar ist.

### Beispiel 3

Ein nicht oberflächengeleimtes Trennrohpapier eines Flächengewichts von 62 g/m² gemäß Beispiel 2 wurde mit Clay und Al(OH)₃ enthaltenden Streichmassen gemäß Tabelle 4 beschichtet. Durch die zusätzliche Verwendung eines Gemischs der Al(OH)₃ Typen I und II gemäß Tabelle 1 wurde eine Erhöhung des Wasserrückhaltevermögens der Streichmasse erreicht.

Bei einer Maschinengeschwindigkeit von 600 m/Min. wurden mittels einer Filmpresse einseitig 3 bzw. 5 g/m² (fest) der Streichmassen aufgebracht und anschließend die so pigmentgestrichenen Papiere satiniert.

Wie die Ergebnisse in Tabelle 5 belegen, werden durch die Verwendung von Al(OH)₃ als Streichpigment im Vergleich zu Clay gleiche (Glätte, Mikrorauheit) bzw. sogar bessere (Ölabsorption, Farbdurchschlag, Penetration) Papiereigenschaften erzielt. Lediglich der Strichglanz fällt durch den Clayeinsatz etwas höher aus, was wiederum mit der weniger ausgeprägten Plättchenstruktur der Al(OH)₃-Pigmente erklärt werden kann. Diese Ergebnisse lassen den Schluß zu, daß Al(OH)₃-Streichpigmente auch allein in Streichmassen eingesetzt und mit Clay-Streichpigmenten vergleichbare Papiereigenschaften erzielen können.

### Beispiel 4

Auf einer Papiermaschine mit eingebauter Filmpresse wurden Trennrohpapiere von 60 bis 62 g/m² bei einer Maschinengeschwindigkeit von etwa 550 m/Min. einseitig oberflächengeleimt bzw. pigmentgestrichen. Die Rückseite wurde einheitlich mit einer Stärkelösung beschichtet (etwa 1 g/m² fest). Die Streichmassenrezepturen sind der Tabelle 4 zu entnehmen. Die Oberflächen veredelten Trennrohpapiere wurden gemäß üblicher Praxisbedingungen anschließend auf etwa 12 % vorgefeuchtet und danach einer Satinage in einem 16-Walzen-Superkalander unterworfen.

Im Vergleich zu dem hochsatinierten oberflächengeleimten Trennrohpapier vom Glassine-Typ weisen pigmentgestrichene Papiere bessere Oberflächeneigenschaften auf. Das gilt insbesondere hinsichtlich Glätte, Glanz, Mikrorauheit und Ölabsorption. Auch die Mikroporosität verringert sich durch die Pigmentierung wie die in Tabelle 6 dargestellten Ergebnisse zeigen.

Überraschend zeigt das Al(OH)₃ im Vergleich zu Clay Qualitätsvorteile, wenn optimale Satinagebedingungen vorherrschen. Das gilt insbesondere für den Strichglanz.

### Beispiel 5

Die Praxispapiere gemäß Tabelle 6 wurden unter Verwendung eines 5-Walzen-Auftragswerks (bei lösungsmittelfreiem (LF) Siliconsystem) bzw. eines Akkugravur-Walzenauftragswerks (bei Siliconemulsion) bei Maschinengeschwindigkeiten von 150 m/Min. beschichtet. Das Clay-gestrichene Papier wurde lediglich in einem Fall (LF I-Siliconsystem) als Referenzmuster eingesetzt. Es lagen bereits genügend statistisch gesicherte Ergebnisse vor, daß mit Clay-gestrichene Trennrohpapiere eine maximal 10 bis 15 %ige Einsparung an Silicon im Vergleich zu klassischen Glassine-Papieren bei vergleichbarer Dehäsivwirkung möglich ist. Der Siliconauftrag wurde dabei zwischen 0,5 und 1,0 g/m² (fest) variiert. Mittels eines Methylenblau-Farbtests wurde die Geschlossenheit der aufgebrachten Siliconfilme bestimmt. Je geringer die Farbmaßzahl ausfällt, um so geschlossener ist der gebildete Siliconfilm und um so höher müßte demnach die Dehäsivwirkung gegen Klebstoffe sein. Die Ergebnisse sind der Tabelle 7 zu entnehmen.

Bei etwa vergleichbarem Siliconauftrag von 0,8 bis 0,9 g/m² liegen die an pigmentgestrichenen Papieren - mit Ausnahme der emulsionssiliconisierten Papiere - ermittelten Farbmaßzahlen bedeutend niedriger. Ebenso fallen Glanz und Mikrorauheit bei den pigmentgestrichenen Trennrohpapieren signifikant besser aus.

Ein Vergleich der Clay- und Al(OH)3-gestrichenen Trennrohpapiere bei 0,6 g/m² Siliconauftrag (LF-Siliconsystem I) weist eindeutige Vorteile für Al(OH)₃-Beschichtungen bezüglich Farbmaßzahl aus.

Auf die Problematik der absoluten Siliconauftragsbestimmung mittels der üblicherweise verwendeten Röntgenfluoreszenzmessung bei Clay-gestrichenen Trennrohpapieren sei hier zusätzlich verwiesen.

Während Pigmentstriche von 3 bis 5 g/m² bei Clay-Einsatz ein "Untergrundrauschen" der unsiliconisierten Bahn von etwa 0,9 bis 1,3 g/m² an Silicium mit Abweichungen bis zu ± 0,10 bis 0,15 g/m² über das Längs- und Querprofil der Papierbahn aufweisen, kann bei Verwendung von Al(OH)₃-Streichpigmenten das "Untergrundrauschen" völlig unterdrückt werden. Dazu ist es nur erforderlich, ein heute immer mehr verwendetes Röhrengerät anstatt eines Isotopengerätes einzusetzen und die Meßbreite (Window) auf 1,65-1,85 keV anstatt der sonst üblichen 1,506-1,978 keV einzuengen.

Damit wird dem Siliconbeschichter die Möglichkeit einer exakten, absoluten Bestimmung des Siliconauftrages und der Auftragsschwankungen und damit einer besseren Voraussage bzw. Kontrolle der Dehäsiveigenschaften der so pigmentgestrichenen und siliconisierten Papiere gegeben.

Bei Clay-gestrichenen Trennrohpapieren muß dagegen die Bestimmung des auf das Papier aufgebrachten Silicons über eine Differenzmessung (Abzug des "Untergrundrauschens") erfolgen, wie auch in unseren Fällen (Tabelle 7 und 8) geschehen.

Eindeutige Vorteile, auch gegenüber dem Clay-gestrichenen Referenzpapier, weisen die erfindungsgemäß mit Al(OH)₃-gestrichenen Trennrohpapiere hinsichtlich der Dehäsiveigenschaften nach Siliconisierung auf, wie Tabelle 8 zu entnehmen ist.

Die Ergebnisse von low speed-Trennkraftmessungen mit Testklebebändern sind nach allgemeiner Erfahrung der Siliconbeschichter aussagekräftiger als high speed-Messungen. Das gilt besonders dann, wenn Differenzierungen zwischen verschiedenen Siliconoberflächen vorgenommen werden sollen.

Bereits bei etwa vergleichbarem Siliconauftrag von 0,8 bis 0,9 g/m² zeigen die erfindungsgemäß mit Al(OH)₃ gestrichenen Papiere deutlich niedrigere Trennwerte, unabhängig vom verwendeten Siliconsystem.

Selbst bei niedrigstem LF-Siliconauftrag von 0,55 g/m² stellen sich Trennkräfte ein, die noch niedriger liegen als die bei Standard-Glassine-Papieren üblichen Siliconauftragsmengen von 0,9 bis 1,0 g/m². Daraus errechnen sich Reduzierungen im Siliconauftrag bei vergleichbarem Trennkraftniveau von mindestens 30 %. Irgendwelche Haftungs- oder Vernetzungsstörungen des Siliconfilms auf mit Al(OH)₃ pigmentgestrichenen Trennrohpapieren wurden nicht festgestellt.

Das Clay-gestrichene Referenzpapier erreicht nicht diese überraschend guten Resultate von Al(OH)₃-Strichen.

Die Einsparungen an Silicon bei Verwendung der erfindungsgemäßen Al(OH)₃ gestrichenen Trennrohpapiere heben bei weitem die höheren Pigmentkosten im Vergleich zu Clay auf.

Dabei sind noch nicht einmal die großen Möglichkeiten zur Bindemittelreduzierung bis zum Erreichen der KPVK in der Al(OH)₃-Pigmentmatrix berücksichtigt worden.

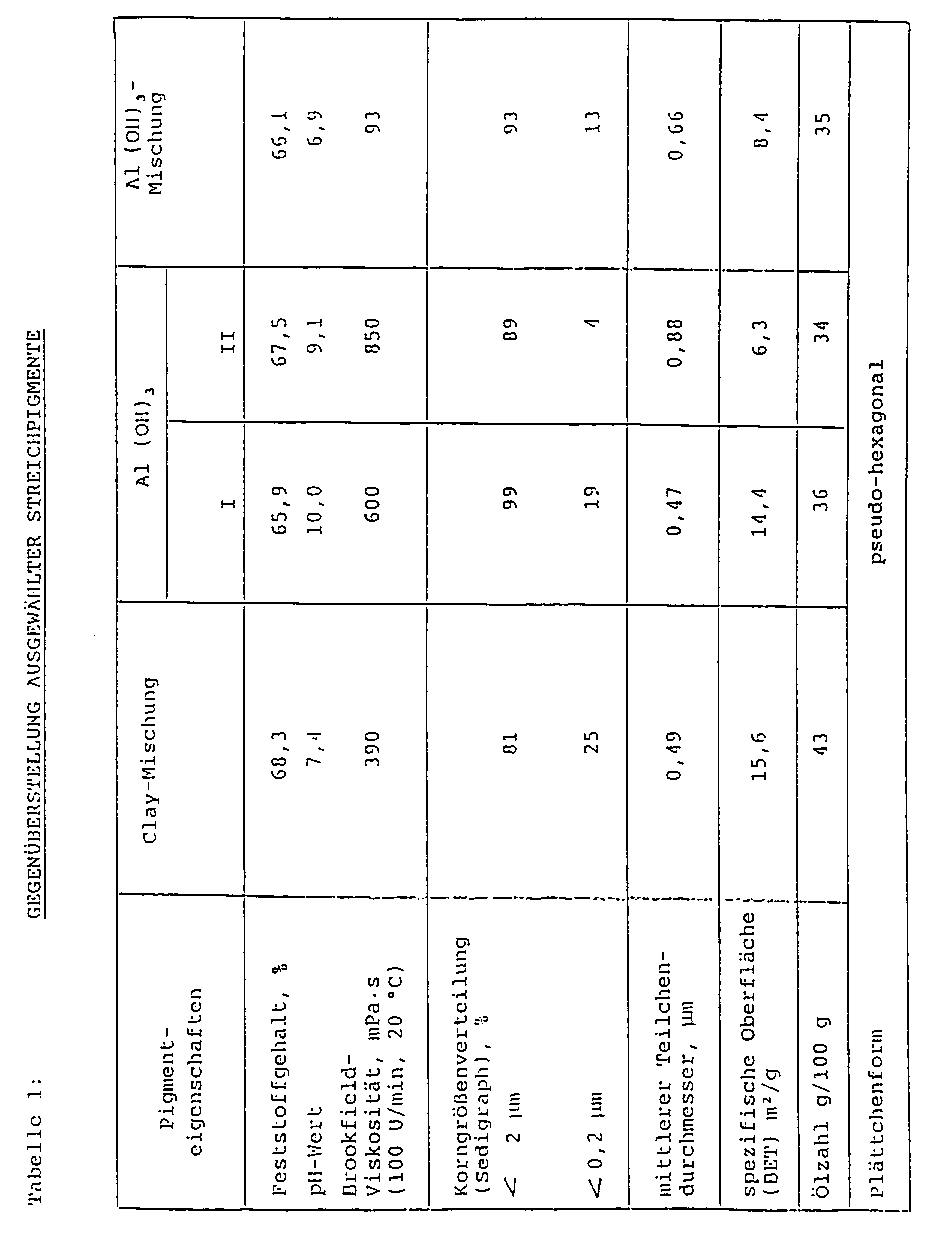

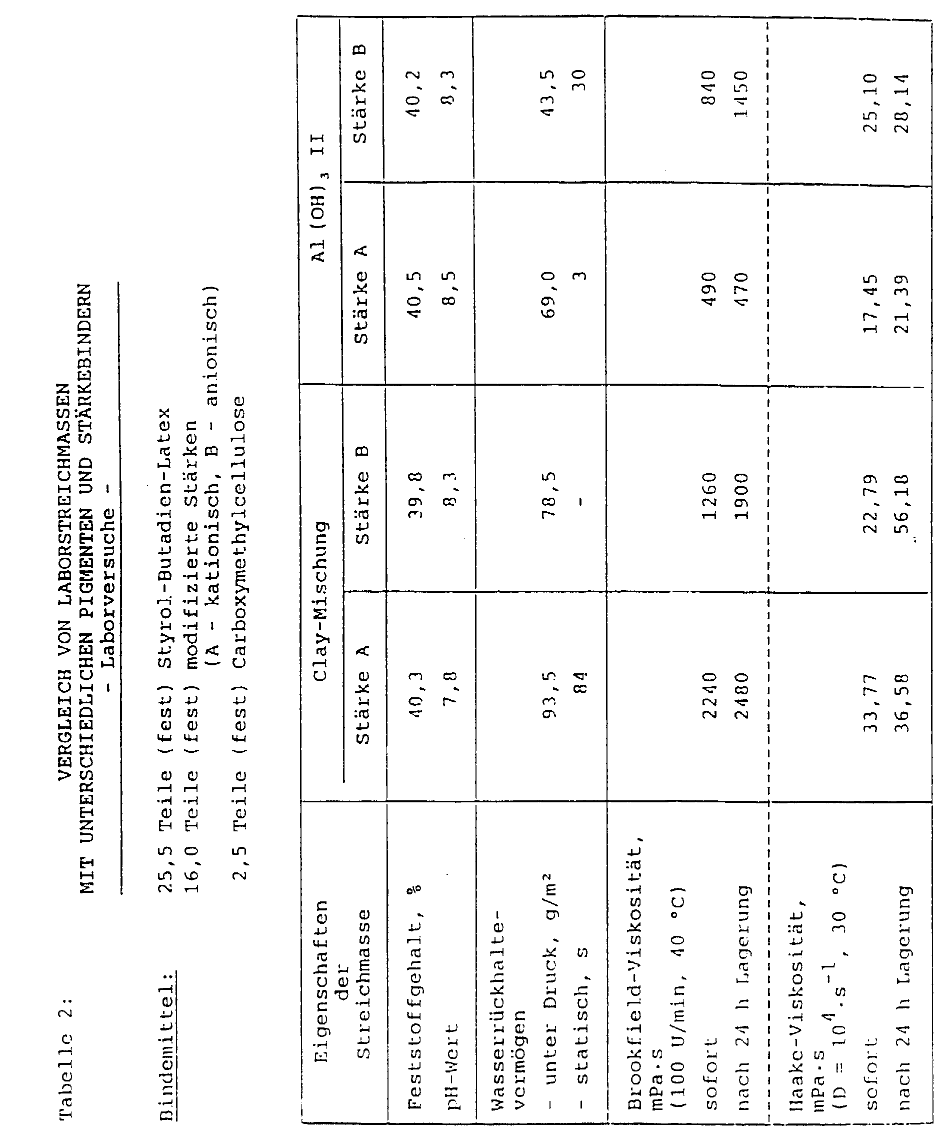

**Tabelle 3:**

| VERGLEICH EINSEITIG PIGMENTGESTRICHENER TRENNROHPAPIERE - Laborversuche - | | | | |
|---|---|---|---|---|
| Streichmasse: Feststoffgehalt 45 % pH-Wert 8,5 Pigment/Bindemittel-Verhältnis 1:0,44 (fest) | | | | |

| Papiereigenschaften (Rohpapier 62 g/m²) | Clay-Mischung | | Al (OH)₃ II | |
|---|---|---|---|---|
| Strichauftrag, g/m² | ca. 3 | ca. 5 | ca. 3 | ca. 5 |
| Transparenz, % | | | | |
| unsatiniert | 30,4 | 30,3 | 28,1 | 28,4 |
| satiniert | 35,8 | 35,8 | 34,3 | 34,9 |

| Mikrorauheit (PPS), µm | | | | |
|---|---|---|---|---|
| unsatiniert | 8,42 | 8,34 | 8,31 | 7,93 |
| satiniert | 1,96 | 1,85 | 1,87 | 1,83 |

| Glanz (75 °), % | | | | |
|---|---|---|---|---|
| satiniert | 37,4 | 44,3 | 33,3 | 37,2 |

| SCAN-Porosität, cm³/m²·s | | | | |
|---|---|---|---|---|
| unsatiniert | 1210 | 113 | 3210 | 1000 |
| satiniert | 246 | 27 | 642 | 203 |

| Ölabsorption, g/m² | | | | |
|---|---|---|---|---|
| unsatiniert | 3,26 | 11,5 | 10,40 | 2,73 |
| satiniert | 0,79 | 0,15 | 2,49 | 0,75 |

| Penetration, s | | | | |
|---|---|---|---|---|
| unsatiniert | 137 | 140 | 141 | 138 |
| satiniert | 119 | 120 | 115 | 118 |

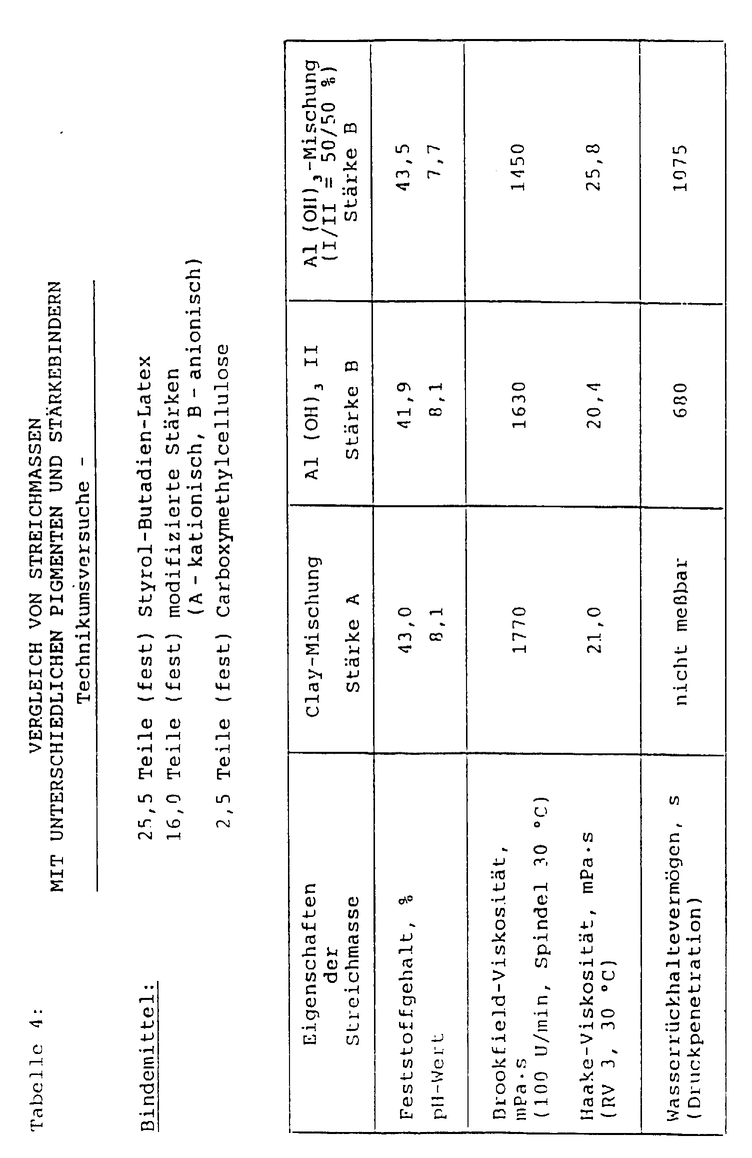

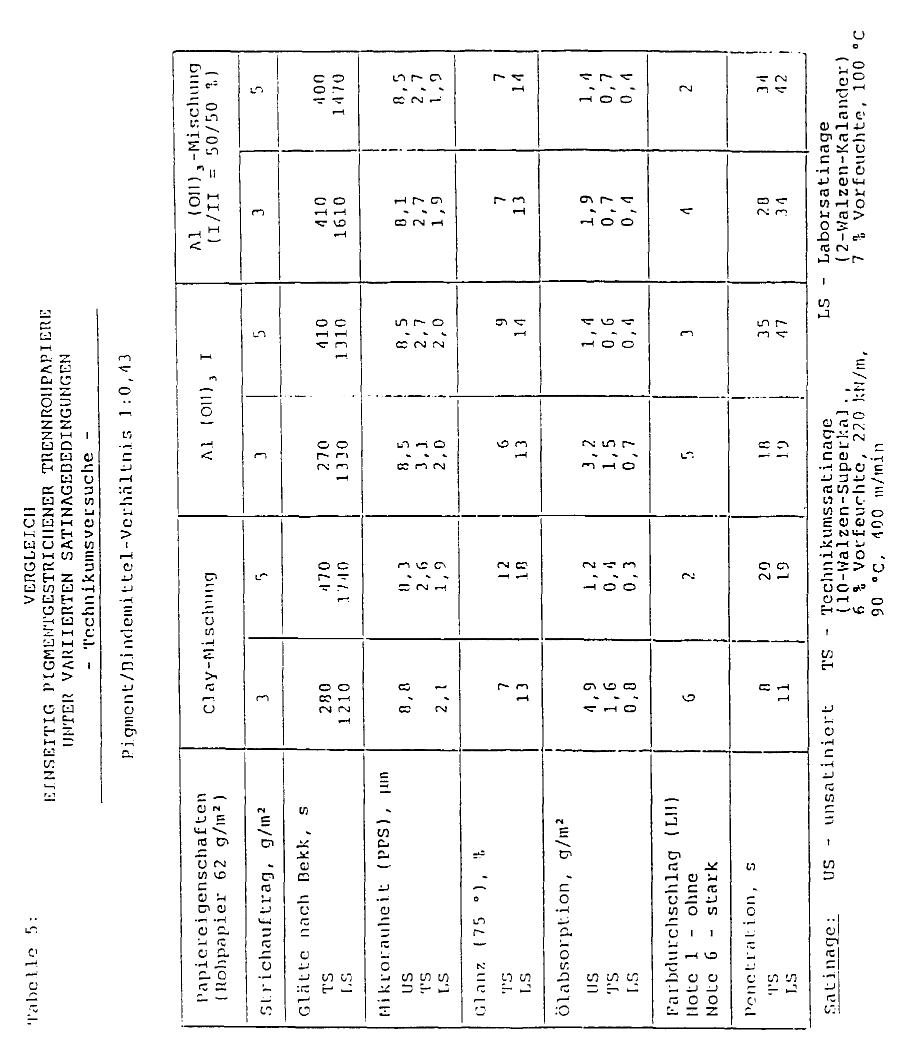

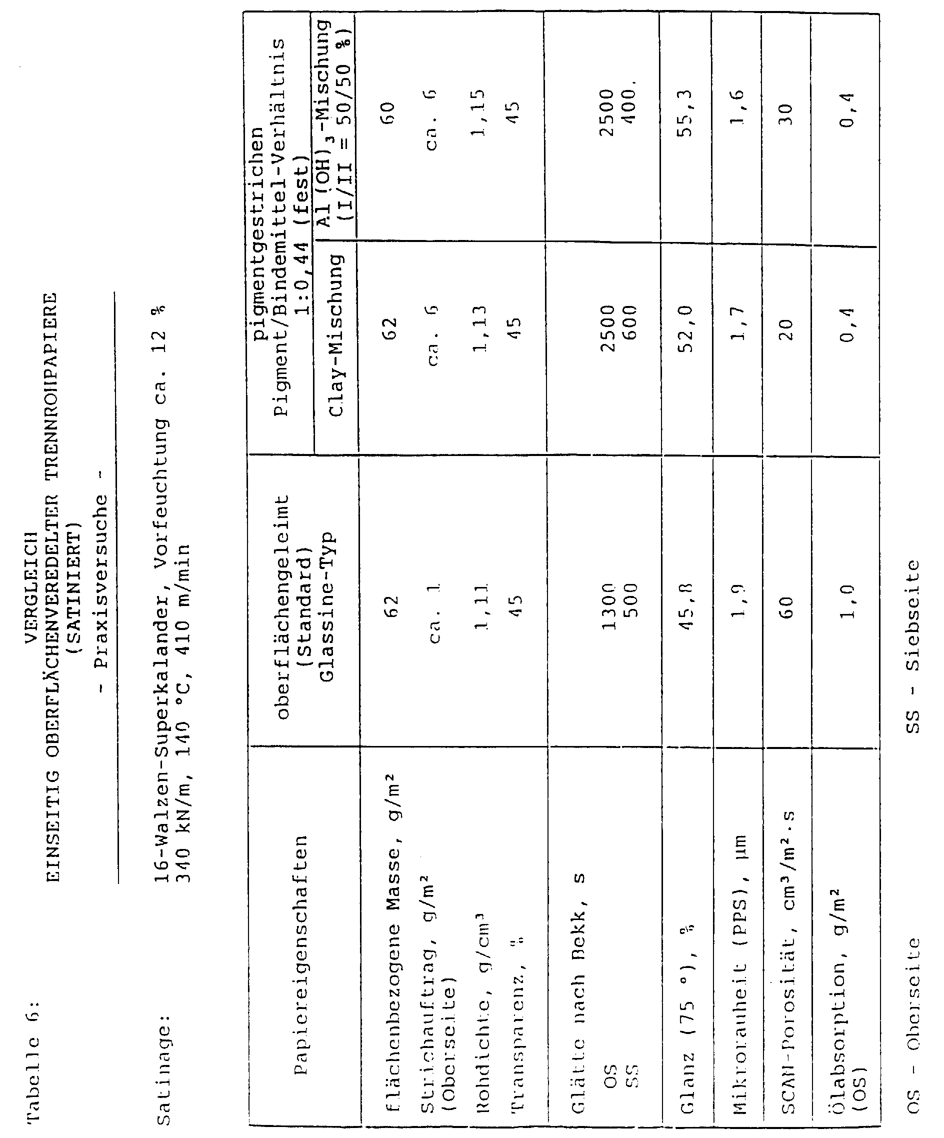

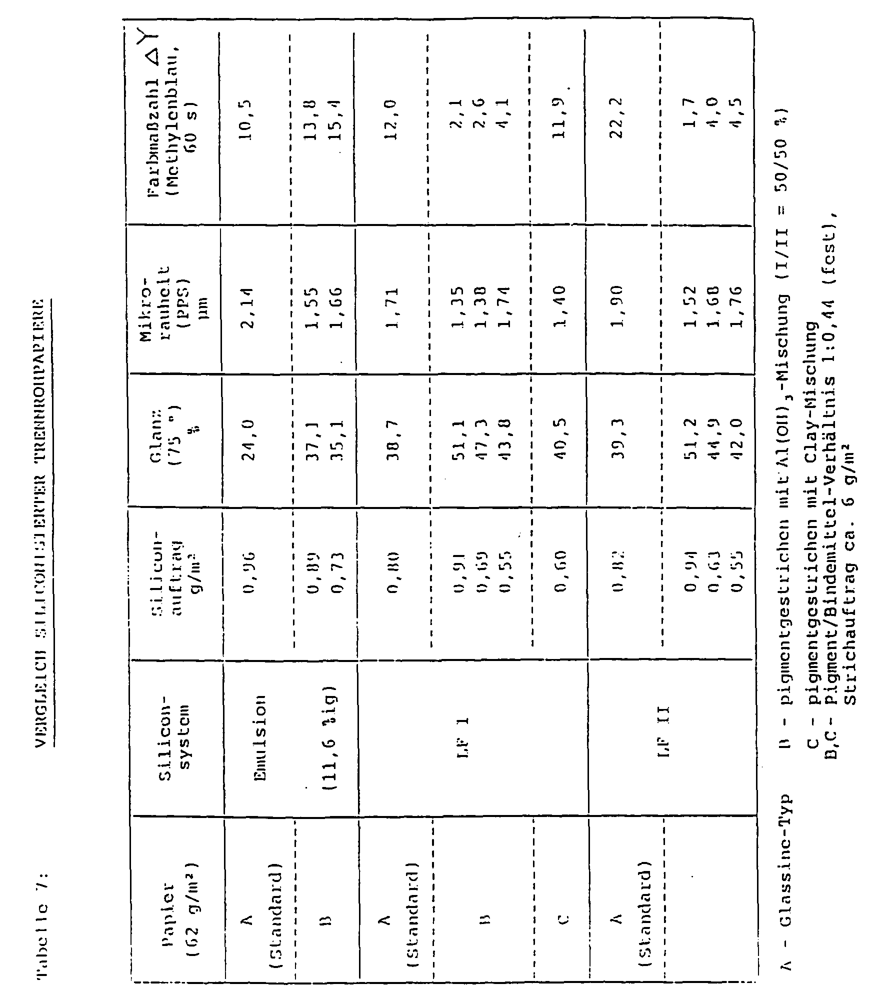

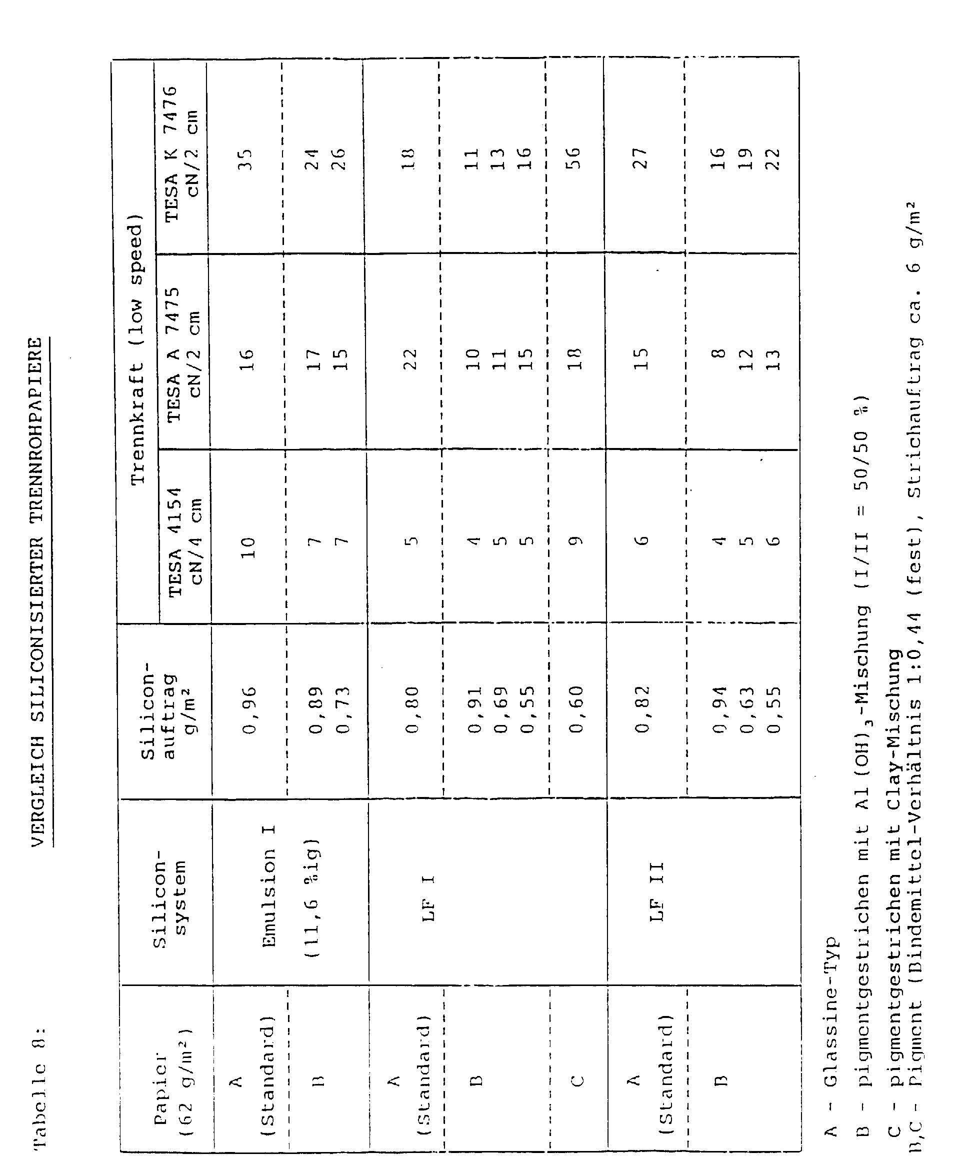

## Patentansprüche

1. Trennrohpapier für die Beschichtung mit einem dehäsiven Siliconauftrag, bei dem ein Bindemittel enthaltender Pigmentstrich auf dem Papier ausgebildet ist, dadurch gekennzeichnet, daß der Pigmentstrich Aluminiumhydroxid als einziges Pigment oder ein Pigmentgemisch mit Aluminiumhydroxid als Hauptbestandteil enthält und der Pigmentstrich in einer Stärke von 3 bis 10 g/m² auf dem Papier ausgebildet ist.

2. Trennrohpapier nach Anspruch 1, dadurch gekennzeichnet, daß Aluminiumhydroxide unterschiedlicher Korngrößenverteilung im Pigmentstrich enthalten sind.

3. Trennrohpapier nach Anspruch 1 oder 2, dadurch gekennzeichnet, daß als Bindemittel alle in der Papierstreicherei üblichen wasserlöslichen Polymere wie Stärkederivate, Carboxymethylcellulose oder Polyvinylalkohole und wäßrige Polymerdispersionen auf der Basis von Acrylsäure, Acrylsäureestern, Acrylnitril, Viny]acetat, Butadien und Styrol allein oder in Gemischen eingesetzt werden.

4. Trennrohpapier nach Anspruch 1 bis 3, dadurch gekennzeichnet, daß das Bindemittel oder Bindemittelgemisch in einem Pigment/Bindemittel-Verhältnis von 1:0,30 bis 1:2,0 (fest gerechnet) vorliegt.

5. Trennrohpapier nach einem der vorhergehenden Ansprüche, dadurch gekennzeichnet, daß der Pigmentstrich auf einem oberflächengeleimten Papier ausgebildet ist.

6. Trennrohpapier nach einem der vorhergehenden Ansprüche, dadurch gekennzeichnet, daß der Pigmentstrich beidseitig aufgebracht ist.

7. Trennpapier mit einem dehäsiven Siliconauftrag, dadurch gekennzeichnet, daß der Siliconauftrag auf einem Trennrohpapier nach einem der Ansprüche 1 bis 6 ausgebildet ist.

## Claims

1. Raw release paper for coating with a layer of dehesive silicone coating, in which a pigment coating containing a binding agent is formed on the paper, characterized in that the pigment coating contains aluminum hydroxide as a sole pigment or a pigment mixture with aluminum hydroxide as a main component and that the pigment coating is applied on the paper with an application weight of 3 to 10 g/m².

2. Raw release paper according to claim 1, characterized in that aluminum hydroxides of different particle-size distribution are contained in the pigment mixture.

3. Raw release paper according to claim 1 or 2, characterized in that usable as binding agents are all water-soluble polymers commonly used in paper-coating technology, such as starch derivatives, carboxymethylcellulose or polyvinyl alcohols and aqueous polymer dispersions based upon acrylic acid, acrylic acid esters, acrylonitrile, vinyl acetate, butadiene and styrene, alone or in mixtures.

4. Raw release papers according to claim 1 to 3, characterized in that the binding agent or binding-agent mixture is available in a pigment/binder ratio of from 1:0.30 to 1:2.0 (calculated with reference to solids).

5. Raw release paper according to one of the preceding claims, characterized in that the pigment coating is formed on a surface-sized paper.

6. Raw release paper according to one of the preceding claims, characterized in that the pigment coating is applied to both sides.

7. Raw release paper with a releasing silicone coating, characterized in that the silicone coating is formed on a raw release paper according to one of claims 1 to 6.

## Revendications

1. Papier brut de séparation pour l'enduction avec une couche de silicone assurant le décollement, dans lequel on forme sur le papier un revêtement pigmentaire contenant un liant, caractérisé en ce que le revêtement pigmentaire contient de l'hydroxyde d'aluminium comme seul pigment ou un mélange de pigments avec l'hydroxyde d'aluminium comme constituant principal, et en ce que le revêtement pigmentaire est formé sur le papier avec une quantité unitaire allant de 3 à 10 g/m².

2. Papier brut de séparation selon la revendication 1, caractérisé en ce que des hydroxydes d'aluminium de différentes distributions de tailles des particules sont contenus dans le revêtement pigmentaire.

3. Papier brut de séparation selon la revendication 1 ou 2, caractérisé en ce que l'on utilise comme liants tous les polymères solubles dans l'eau usuels en enduction du papier, tels que dérivés de l'amidon, carboxyméthyle cellulose ou alcool polyvinylique et les dispersions aqueuses de polymère à base d'acide acrylique, d'ester d'acide acrylique, d'acrylonitrile, d'acétate de vinyle, de butadiène et de styrène, seuls ou en mélange.

4. Papier brut de séparation selon les revendications 1 à 3, caractérisé en ce que le liant ou le mélange de liant est présent avec un rapport pigment/liant allant de 1:0,30 à 1:2 (calculé sur le poids solide).

5. Papier brut de séparation selon l'une des revendications précédentes, caractérisé en ce que le revêtement pigmentaire est formé sur un papier à encollage de surface.

6. Papier brut de séparation selon l'une des revendications précédentes, caractérisé en ce que le revêtement pigmentaire est appliqué sur les deux faces.

7. Papier de séparation avec un revêtement de silicone assurant le décollement, caractérisé en ce que le revêtement de silicone est appliqué sur un papier brut de séparation selon l'une des revendications 1 à 6.
